(19) Europäisches Patentamt
European Patent Office
Office européen des brevets

(11) **EP 3 239 798 B1**

(12) **FASCICULE DE BREVET EUROPEEN**

(45) Date de publication et mention de la délivrance du brevet:
**20.02.2019 Bulletin 2019/08**

(51) Int Cl.:
***F24D 19/10*** *(2006.01)*

(21) Numéro de dépôt: **17168596.9**

(22) Date de dépôt: **28.04.2017**

(54) **PROCEDE DE DETECTION DE DEFICIENCES D'UN DISPOSITIF DE CHAUFFAGE**

VERFAHREN ZUR ERKENNUNG VON MÄNGELN EINES HEIZGERÄTS

METHOD FOR DETECTING DEFICIENCIES OF A HEATING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2016 FR 1653821**

(43) Date de publication de la demande:
**01.11.2017 Bulletin 2017/44**

(73) Titulaire: **Electricité de France**
**75008 Paris (FR)**

(72) Inventeurs:
• **MALISANI, Paul**
**75018 PARIS (FR)**

• **GASTIGER, Frédéric**
**77210 AVON (FR)**
• **SUPLICE, Béatrice**
**92600 ASNIERES sur Seine (FR)**

(74) Mandataire: **Regimbeau**
**87 rue de Sèze**
**69477 Lyon Cedex 06 (FR)**

(56) Documents cités:
**EP-A1- 3 015 937     GB-A- 2 524 033**
**US-A1- 2013 073 260**

**Description**

DOMAINE TECHNIQUE GENERAL

La présente invention concerne un procédé de détection de déficiences d'un dispositif de chauffage.

ETAT DE L'ART

Les dispositifs de chauffage, et notamment les chaudières à gaz (qui brulent du gaz pour chauffer de l'eau circulant dans un circuit afin de libérer sa chaleur au niveau de radiateurs) sont des équipements complexes subissant à longueur de journée des cycles d'allumage/extinction qui entraînent une usure, et la nécessité de maintenances régulières.

En particulier, les dispositifs de chauffage sont en général soumis à deux valeurs d'une consigne de température fournie par un thermostat, une haute (par exemple 20°C) typiquement associée aux périodes de présence active dans le logement (par exemple le matin et la soirée), et une plus basse (par exemple 18°C) typiquement associée aux périodes d'absence et de nuit.

Alors que les phases de consigne basse correspondent généralement à une baisse progressive de la température (le dispositif de chauffage étant éteint), les moments de passage de la consigne basse à la consigne haute (par exemple 7h et 18h) entraînent au contraire une remise en marche forcée appelée « relance ».

Un dysfonctionnement du dispositif de chauffage se traduit par un non-respect de la consigne : le thermostat envoie l'ordre de relance, mais celle-ci ne fonctionne pas, ce qui se traduit par une absence de remontée de la température intérieure, voire à une poursuite de la baisse. Cela se traduit par une sensation d'inconfort pour l'habitant, et peut signifier que la chaudière est en fin de vie ou mal connectée au thermostat.

Il est donc important de disposer de mécanismes de diagnostic de panne pour l'utilisateur, mais aussi pour l'entreprise qui gère la maintenance des équipements, de sorte à lui permettre d'optimiser la gestion de son parc. En effet, un diagnostic automatique permet de discriminer les appels des clients au service maintenance de sorte à améliorer la gestion des différents cas, en limitant les déplacements inutiles de techniciens/réparateurs. Il est également souhaitable de favoriser le remplacement efficace des systèmes défaillants, en détectant plus rapidement l'origine de la panne.

Ainsi, il a été proposé des solutions permettant de déterminer une température théorique du bâtiment chauffé, de sorte à la comparer à la température réelle. Cela nécessite toutefois d'avoir accès à des données supplémentaires, comme la température extérieure en temps réel ou le comportement du bâtiment, d'où des appels permanents à des données externes (serveur Web pour la météo), et l'obligation de coupler le service à un algorithme d'identification du bâtiment.

De telles méthodes sont complexes, propre à chaque cas, et les sources d'erreurs sont nombreuses.

Alternativement, il a été proposé des méthodes de détection de pannes par reconnaissance de motifs et apprentissage, voir par exemple le document GB2524033.

De telles méthodes restent complexes, et ne sont pas fiables immédiatement faute de données en quantité suffisante.

Il serait par conséquent souhaitable de disposer d'une solution technique simple et universelle permettant de suivre efficacement et objectivement l'évolution de la performance d'un dispositif de chauffage, de sorte à permettre la détection rapide voire anticipée des défaillances de fonctionnement, l'identification de leur origine et l'identification des actions à prendre, ou de planifier des opérations de maintenance.

L'invention vient améliorer la situation.

PRESENTATION DE L'INVENTION

L'invention propose de pallier ces inconvénients en proposant selon un premier aspect un procédé de détection de déficiences d'un dispositif de chauffage en fonctionnement dans un milieu donné, comprenant la mise en oeuvre d'étapes de :

(a) Mesure par une sonde de la température dudit milieu au cours du temps sur un intervalle de temps donné ;
(b) Calcul par des moyens de traitement de données d'une erreur de température au cours du temps en fonction de la température mesurée et d'une consigne de température au cours du temps appliquée par le dispositif de chauffage ;
(c) Détermination par filtrage par les moyens de traitement de données d'une composante haute fréquence de la température mesurée ;
(d) Détermination par les moyens de traitement de données d'un ensemble des instants d'anomalie dans ledit intervalle donné par comparaison de ladite erreur de température au cours du temps avec un seuil d'erreur prédéterminé ;

(e) Si une durée d'au moins un sous-ensemble continu de l'ensemble des instants d'anomalie est supérieure à un seuil de mesure prédéterminé, détermination par les moyens de traitement de données d'un état déficient du dispositif en fonction d'au moins une valeur maximale atteinte dans ledit sous-ensemble continu de ladite composante haute fréquence de la température mesurée ;

(f) Déclenchement par les moyens de traitement de données d'une alarme si le dispositif est déterminé comme présentant un état déficient.

Le procédé selon l'invention est avantageusement complété par les caractéristiques suivantes, prises seules ou en une quelconque de leur combinaison techniquement possible :

- l'étape (d) comprend le calcul par les moyens de traitement de données de la durée de l'ensemble des instants d'anomalie dans ledit intervalle donné ; et, si ladite durée de l'ensemble des instants d'anomalie est supérieure audit seuil de mesure prédéterminé, l'identification de chaque sous-ensemble continu de l'ensemble des instants d'anomalie présentant une durée supérieure audit seuil de mesure prédéterminé ;
- la durée d'un ensemble ou un sous-ensemble d'instants d'anomalie est la mesure de Lebesgue dudit ensemble ou sous-ensemble sur ledit intervalle donné ;
- le dispositif est déterminé à l'étape (e) comme n'étant pas dans un état déficient si ladite durée de l'ensemble des instants d'anomalie n'est pas supérieure audit seuil de mesure prédéterminé ou si aucun sous-ensemble continu de l'ensemble des instants d'anomalie présentant une durée supérieure audit seuil de mesure prédéterminé n'est identifié ;
- l'état déficient du dispositif est choisi parmi :

  - Arrêté complètement,
  - Arrêté temporairement, et/ou
  - Mal réglé.

- le dispositif est déterminé dans un état arrêté complètement à l'étape (e) si ladite valeur maximale atteinte dans ledit sous-ensemble continu de ladite composante haute fréquence de la température mesurée est inférieure à un premier seuil ;
- le dispositif est déterminé dans un état mal réglé à l'étape (e) si ladite valeur maximale atteinte dans ledit sous-ensemble continu de ladite composante haute fréquence de la température mesurée est comprise entre ledit premier seuil et un deuxième seuil supérieur au premier seuil ;
- le dispositif est déterminé dans un état arrêté temporairement à l'étape (e) si ladite valeur maximale atteinte dans ledit sous-ensemble continu de

ladite composante haute fréquence de la température mesurée n'est pas inférieure audit premier seuil, et si la durée entre le début dudit sous-ensemble continu et l'instant où ladite valeur maximale de ladite composante haute fréquence de la température mesurée est atteinte dans ledit sous-ensemble continu est supérieure à un seuil de retard prédéterminé ;

- le dispositif est déterminé comme ne présentant pas un état déficient à l'étape (e) si ladite valeur maximale atteinte dans ledit sous-ensemble continu de ladite composante haute fréquence de la température mesurée n'est pas inférieure audit deuxième seuil, et si la durée entre le début dudit sous-ensemble continu et l'instant où ladite valeur maximale de ladite composante haute fréquence de la température mesurée est atteinte dans ledit sous-ensemble continu n'est pas supérieure audit seuil de retard prédéterminé ;
- le dispositif comprend un module de contrôle fournissant ladite consigne de température au cours du temps appliquée par le dispositif de chauffage, les moyens de traitement de données étant intégrés audit module de contrôle ;
- les moyens de traitement de données sont connectés à un réseau de communication, l'alarme de l'étape (f) étant déclenchée au niveau d'un équipement distant d'un opérateur du dispositif.

Selon un deuxième aspect, l'invention concerne un système de détection de déficiences d'un dispositif de chauffage en fonctionnement dans un milieu donné, comprenant :

- une sonde mesurant la température dudit milieu au cours du temps sur un intervalle de temps donné ;
- des moyens de traitement de données configurés pour mettre en oeuvre :

  o un module de calcul d'une erreur de température au cours du temps en fonction de la température mesurée et d'une consigne de température au cours du temps appliquée par le dispositif de chauffage ;

o un module de détermination par filtrage d'une composante haute fréquence de la température mesurée ;

o un module de détermination d'un ensemble des instants d'anomalie dans ledit intervalle donné par comparaison de ladite erreur de température au cours du temps avec un seuil d'erreur prédéterminé ;

o un module de détermination, si une durée d'au moins un sous-ensemble continu de l'ensemble des instants d'anomalie est supérieure à un seuil de mesure prédéterminé, d'un état déficient du dispositif en fonction d'au moins une valeur maximale atteinte dans ledit sous-ensemble continu de ladite composante haute fréquence de la température mesurée ;

o un module de déclenchement d'une alarme si le dispositif est déterminé comme présentant un état déficient.

Selon des caractéristiques avantageuses et non limitatives :

- le système est un thermostat du dispositif de chauffage comprenant en outre un module de contrôle du dispositif de chauffage ;
- les moyens de traitement de données étant mis en oeuvre par le module de contrôle.

Selon un troisième aspect, l'invention concerne un dispositif de chauffage comprenant un système selon le deuxième aspect.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- les figures 1a-1c sont des schémas de trois modes de réalisation d'un dispositif de chauffage en fonctionnement pour la mise en oeuvre du procédé selon l'invention ;
- les figures 2a-2b sont deux exemples de températures mesurées et consignes au cours du temps pour des dispositifs de chauffage dont l'un est fonctionnel et l'autre présente une déficience.

DESCRIPTION DETAILLEE

*Architecture générale*

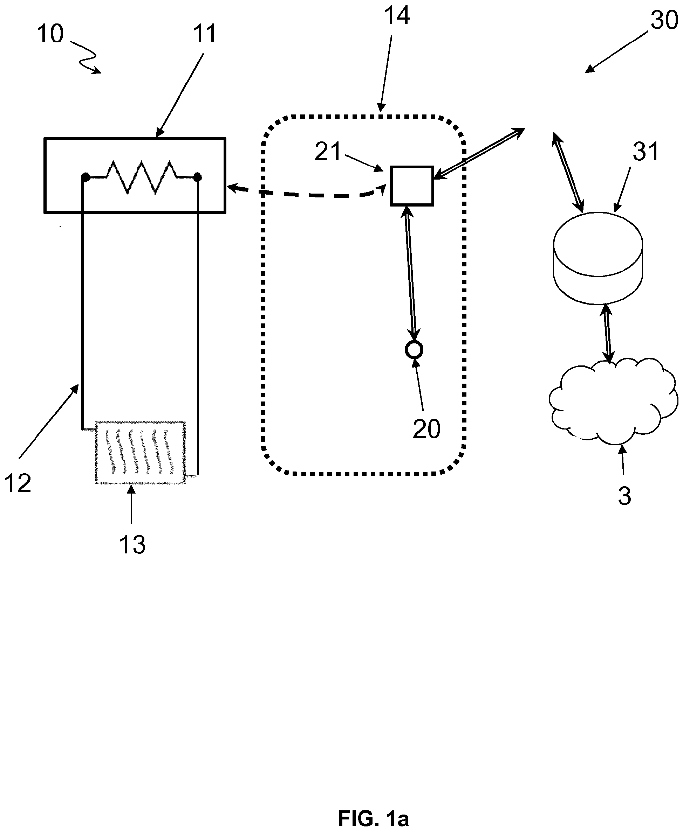

En référence à la **figure 1a,** l'invention propose un procédé de détection de déficiences d'un dispositif de chauffage 10 en fonctionnement dans un milieu donné, typiquement l'air intérieur d'un bâtiment. On comprendra que ledit milieu donné peut être également l'eau d'un réservoir. Comme l'on verra plus loin, ledit milieu est un espace dont la température est régulée par des moyens adéquats.

Le dispositif 10 peut chauffer de façon directe ledit milieu (si par exemple il est un convecteur électrique), ou alternativement de façon indirecte en chauffant un fluide caloporteur (typiquement de l'eau). Dans le dernier cas, le dispositif 10 comprend typiquement une chaudière 11 (avec un ou plusieurs bruleurs à gaz, à mazout, etc. ou des moyens électriques tels qu'une ou plusieurs résistances, un pompe à chaleur etc.), chauffant de l'eau circulant dans un circuit 12 et cédant sa chaleur au milieu à chauffer via des radiateurs 13 lorsque le milieu est de l'air. Par chaudière 11, on entendra tout équipement capable de chauffer un fluide caloporteur liquide pour chauffer ledit milieu donné.

Dans la suite de la présente description, on prendra l'exemple préféré représenté sur les figures 1a-1c d'un dispositif 10 de chauffage de l'air d'un bâtiment (typiquement une habitation) comprenant une chaudière 11, un circuit 12 d'eau (ou un autre fluide caloporteur) et au moins un radiateur 13 en échange thermique avec l'air (qui forme ledit milieu donné).

Le dispositif 10 comprend également au moins une sonde de température 20 configurée pour émettre un signal représentatif de la température dudit milieu donné à chauffer, et un module de contrôle 21 dudit dispositif de chauffage 10 en fonction dudit signal émis par la sonde 20. L'ensemble de la sonde 20 et du module de contrôle 21 forme couramment un équipement unique 14 présentant la forme d'un boitier, souvent fixé au mur, appelé thermostat.

Le dispositif 10 est dans un mode de fonctionnement « normal » régulé en température. Pour cela, la ou les sondes 20 envoient en permanence ou par intermittence le signal représentatif de la température du milieu. Ce signal peut être un envoi de données représentant numériquement la température, ou un signal électrique dont un paramètre est fonction de la température.

Le module de contrôle 21 est typiquement une carte électronique qui déclenche ou non le chauffage en fonction de la température mesurée, de consignes, et de nombreux autres paramètres éventuels (programmation, saison, plages horaires, heures creuses/heures pleines, usages habituels de l'utilisateur, etc.).

De façon générale, un dispositif de chauffage 10 est configuré pour réguler la température du milieu en fonction d'une température de consigne qui est une fonction du temps qu'on désignera *Tcons(t).*

Il y a le plus souvent au moins deux valeurs de températures de consigne dont une température de « confort » qui est la température moyenne souhaitée dans des plages correspondant à une présence de l'utilisateur, et une température de « nuit » qui est la température moyenne souhaitée dans des plages d'absence de l'utilisateur et de nuit.

Ainsi, la température de consigne en fonction du temps est généralement une fonction en escaliers. Dans le cadre du présent procédé, n'importe quelle fonction *Tcons(t)* définie par morceaux sur un intervalle de fonctionnement donné (typiquement une journée) peut être utilisée, y compris une fonction comprenant des rampes, des fragments non linéaires, etc.

A tout instant, le module de contrôle 21 est ainsi configuré pour activer la chaudière 11 lorsque le signal reçu est représentatif d'une température inférieure à la température de consigne *Tcons(t),* et/ou configuré pour désactiver la chaudière 11 lorsque le signal reçu est représentatif d'une température supérieure à la température de consigne *Tcons(t).*

En pratique, un léger phénomène d'hystérésis fait que le module de contrôle 21 est plutôt configuré pour activer la chaudière 11 lorsque le signal reçu est représentatif d'une température inférieure à *Tcons(t)* - $\varepsilon$, et désactiver la chaudière 11 lorsque le signal reçu est représentatif d'une température supérieure à *Tcons(t)* + $\varepsilon$ (l'écart induit de $2\varepsilon$ est généralement d'environ 3°C). Cela évite une sorte d'oscillation rapide inutile autour de la température de consigne.

Ainsi, tant que la chaudière 11 est arrêtée et que l'on est au-dessus de la température de consigne à $\varepsilon$ près rien ne se passe, à fortiori si la consigne baisse. Si la température baisse (avec le temps ou parce que l'utilisateur ouvre une fenêtre, etc.) et/ou que la consigne augmente, la chaudière 11 est réactivée, et ce jusqu'à dépasser la température de consigne (d'au moins $\varepsilon$). La température se remet ensuite à baisser, etc. En d'autres termes, il y a une alternance de phases de « refroidissement » pendant lesquelles la température descend jusqu'à la température de consigne, et de phases de « chauffe » pendant lesquelles la température monte sous l'effet de la chaudière 11 allumée jusqu'à dépasser la température de consigne.

Ceci est le fonctionnement nominal, c'est-à-dire en l'absence de déficience.

La présente invention n'est limitée à aucune configuration en particulier, on comprendra que, de façon générale, le module de contrôle 21 régule la température du milieu via l'activation/désactivation de la chaudière 11 (ou un autre moyen de production de chaleur) du dispositif de chauffage 10 en fonction de signaux qui lui sont émis, signaux pouvant représenter des températures et/ou des consignes de fonctionnement.

Le système comprend en outre des moyens de traitement de données 30 pour la mise en oeuvre du présent procédé.

Ces moyens 30 peuvent être distincts ou intégrés dans, voire confondus, avec le module 21, ou ceux d'un équipement distinct (soit local tel qu'un boitier d'accès à internet 31, soit éventuellement distant, et par exemple un serveur placé dans les locaux d'un opérateur de maintenance du dispositif 10).

En particulier, dans un mode de réalisation préféré comme celui de la figure 1a, les moyens 30 sont disposés en local mais connecté à un réseau de communication 3 tel qu'internet via la box 31, en particulier pour communication avec des serveurs d'un tel opérateur du dispositif 10.

Dans l'exemple représenté, les moyens 30 sont en communication avec le thermostat 14 pour récupérer la température mesurée par la sonde 20 et la température de consigne connue du module de contrôle 21.

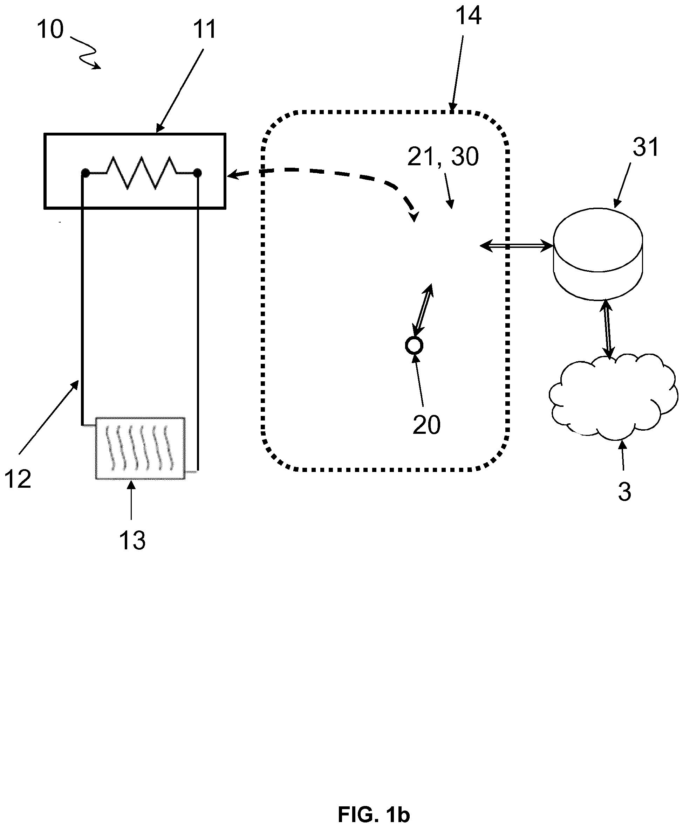

La **figure 1b** représente un mode de réalisation alternatif dans lequel les moyens de traitement de données 30 sont confondus avec le module de contrôle 21.

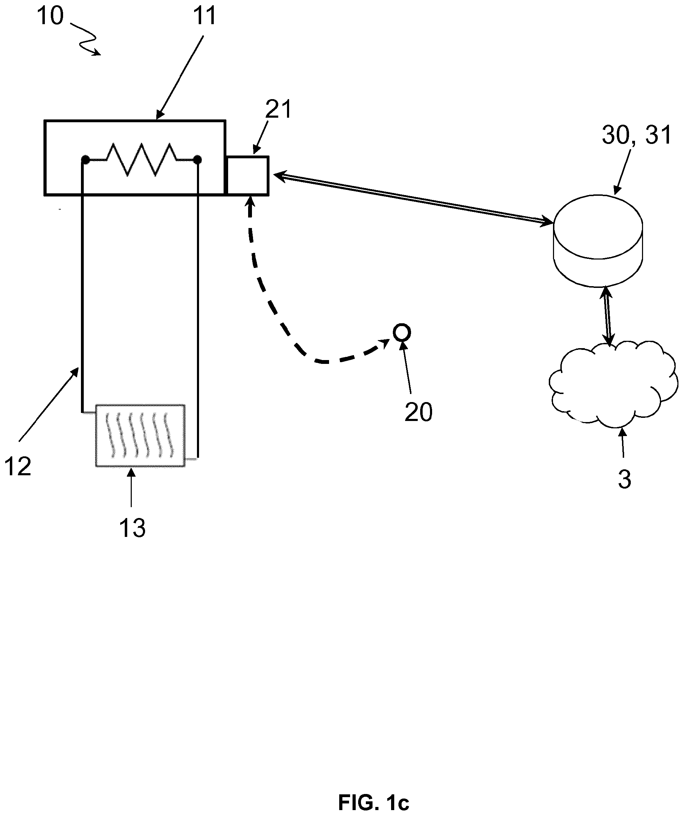

La **figure 1c** représente un autre mode de réalisation alternatif dans lequel d'une part le module de contrôle est intégré à la chaudière 11, et les moyens de traitement 30 sont ceux du boitier d'accès à internet 31.

L'homme du métier saura adapter l'invention à de nombreuses autres architectures.

*Procédé*

Le présent procédé de détection de déficiences d'un dispositif de chauffage 10 en fonctionnement dans un espace donné commence par une étape (a) de mesure par une sonde 20 de la température dans ledit espace au cours du temps sur un intervalle de temps donné. Cet intervalle est préférentiellement celui sur lequel est défini la consigne *Tcons(t),* et est en particulier une journée.

On note que la température mesurée *Tint(t)* peut être mesurée de façon sensiblement continue, ou tous les $\Delta t$ (un pas constant, par exemple 1s) de sorte à avoir un échantillonnage de la température à une vitesse bien plus rapide que les variations classique de la température, ce qui permet de récréer la fonction *Tint(t).*

Dans une étape (b), les moyens de traitement de données 30 calculent une erreur de température au cours du temps (sur ledit intervalle) en fonction de la température mesurée et de la consigne de température au cours du temps appliquée par le dispositif de chauffage 10.

Cette erreur est typiquement calculée par soustraction, avec la formule erreur $e(t) = Tcons(t)-Tint(t)$. Comme expliqué, l'erreur $e(t)$ peut être positive ou négative, mais c'est seulement si elle est positive et élevée (i.e. température mesurée $Tint(t)$ très inférieure à la température de consigne $Tcons(t)$) qu'il y a potentiellement un problème.

Elle doit être de façon générale la plus proche possible de zéro, mais il est tout à fait normal qu'elle s'en écarte régulièrement du fait des variations (et en particulier des discontinuités) de la température de consigne $Tcons(t)$. Le présent procédé va permettre de distinguer les écarts « normaux » des écarts « anormaux » représentatifs d'une déficience.

Cette étape (et les suivantes) peut soit être mise en oeuvre en temps réel, soit de façon différée, par exemple à la fin de l'intervalle de temps (et donc après avoir mesuré $Tint(t)$), $Tcons(t)$ étant soit connu d'avance, soit éventuellement modifié en cours de journée manuellement par l'utilisateur, mais étant dans tous les cas disponible à la fin de la journée.

Dans une étape (b), les moyens de traitement de données 30 déterminent par filtrage une composante haute fréquence $Tint\_f(t)$ de la température mesurée $Tint(t)$.

En d'autres termes, un filtre passe-haut permet de créer un signal dans lequel la composante basse fréquence de la température est éliminée. Il s'agit d'une façon très astucieuse de normaliser la température mesurée $Tint(t)$. En effet, deux bâtiments n'ont jamais exactement le même comportement thermique (isolation, volume du milieu à chauffer, profil et valeurs de la fonction de consigne $Tcons(t)$, etc.), et deux journées ne se déroulent jamais exactement de la même façon (météo, activités humaines et électriques à l'intérieur, ouverture des portes et des fenêtres, etc.). Typiquement, un bâtiment avec une valeur de consigne jour très élevée par rapport à une valeur de consigne nuit (par exemple 22°C et 16°C dans des immeubles de bureau) aura des erreurs de température $e(t)$ bien plus fortes et plus persistantes que si ces consignes sont proches (par exemple 20°C et 18°C), alors que le dispositif 10 marche aussi bien dans un cas que dans l'autre.

Cela fait qu'il n'est pas possible de disposer d'une solution de diagnostic universel en observant simplement les niveaux de température du milieu, d'où les méthodes connues par auto-apprentissage et détection de motifs.

Or, les inventeurs ont découvert de façon surprenante que la composante haute fréquence $Tint\_f(t)$ de la température mesurée $Tint(t)$ avait un comportement dépendant presque seulement du dispositif 10, les autres phénomènes tels que les valeurs de la consigne influant surtout sur la composante basse fréquence de la température mesurée $Tint(t)$. En combinaison avec l'erreur $e(t)$ (qui elle, est fonction de la température mesurée « telle quelle »), la grandeur $Tint\_f(t)$ permet ainsi, comme l'on va le voir, la mise en évidence des déficiences du dispositif 10, et ce, facilement et de façon universelle.

Avantageusement, la fréquence de coupure (c'est-à-dire la fréquence en-dessous de laquelle le filtrage supprime les composantes) est entre 1/3600 Hz et 1/600 Hz, et de façon préférée environ 1/1800 Hz.

1/1800 Hz correspond à une fréquence de 0.5 h$^{-1}$, c'est-à-dire que le filtrage ne garde que les phénomènes de périodicité inférieure à une demi-heure. A une telle échelle, les variations de température sont au maximum de l'ordre du degré, et les inventeurs ont constaté qu'une telle fréquence de coupure donnait des résultats particulièrement fiables.

On note que cette étape (c) peut être faite indépendamment de l'étape (b), simultanément, voire avant cette dernière, car elle n'utilise pas l'erreur $e(t)$. Comme l'on va le voir, l'erreur $e(t)$ est utilisée pour identifier des intervalles d'anomalies potentielles, et la composante haute fréquence $Tint\_f(t)$ de la température mesurée $Tint(t)$ va permettre de tester ces intervalles.

Ainsi, dans une étape (d), les moyens de traitement de données 30 déterminent un ensemble des instants d'anomalie A dans ledit intervalle donné. Cela est fait par comparaison de ladite erreur de température $e(t)$ au cours du temps avec un seuil d'erreur prédéterminé noté $Seuil\_Erreur$.

Plus précisément, si $I$ est ledit intervalle d'étude alors $A \subset I$ et $A = \{t \in I$ tels que $e(t) > Seuil\_Erreur\}$. Le seuil d'erreur est avantageusement compris entre 0.2 et 1°C, préférentiellement environ 0.5°C.

L'étape (d) comprend en outre avantageusement le calcul par les moyens de traitement de données 30 de la durée $L(A)$ de l'ensemble des instants d'anomalie $A$ dans ledit intervalle donné.

La durée de l'ensemble $A$ doit être comprise comme sa mesure au sens mathématique (puisque $A$ est un sous-ensemble d'un intervalle temporel $I \subset \mathbb{R}$), et avantageusement sa mesure de Lebesgue $L(.)$, qui est la mesure la plus intuitive. Elle est définie comme la plus petite mesure définie sur une tribu de $\mathbb{R}$ qui soit complète et coïncide sur les intervalles continus avec leur longueur (i.e. la différence de leurs bornes : $L([t_1 ; t_2]) = t_2 - t_1$).

En effet, il faut comprendre que $A$ peut être composée aussi bien d'intervalles continus (i.e. des périodes pendant lesquelles l'écart est en permanence au-delà du seuil de mesure) que de singletons (instants où le seuil est dépassé ponctuellement). Et la mesure de Lebesgue de l'ensemble $A$ est donné comme la somme des mesures de Lebesgue des parties de $A$, où la mesure d'un intervalle continu est sa longueur et la mesure d'un singleton est nulle, quel que soit le nombre de parties présentant une mesure nulle (on rappelle que la mesure de Lebesgue d'un ensemble dénombrable est nulle).

Ainsi, la mesure de Lebesgue de $A$ peut être vue comme la somme de la longueur des intervalles réels « non triviaux » de l'ensemble *A* de sorte à déterminer une sorte de « durée cumulée d'anomalie ».

Un premier test est alors de comparer ladite durée *L(A)* de l'ensemble des instants d'anomalie *A* avec un seuil de mesure prédéterminé, noté *Seuil_Erreur.* Cette comparaison n'est pas obligatoire mais comme l'on va voir permet de gagner du temps. Ainsi si $L(A) \leq Seuil\_Mesure,$ alors on le dispositif 10 est déterminé dans un état nominal : il n'y a pas de déficience, et les valeurs élevées de l'erreur parfois rencontrée sont considérées normales. Le seuil de mesure est avantageusement de l'ordre de 5 à 10% de la durée de l'intervalle I. Plus précisément, dans le cas où l'intervalle I est une journée, *Seuil_Mesure* est avantageusement compris entre 1 et 2h, préférentiellement environ 1.5h.

*Détection de déficience*

Dans une étape (e) va être effectivement déterminé si le dispositif 10 présente potentiellement un état déficient, et avantageusement lequel.

Pour cela, les moyens de traitement de données 30 déterminent préalablement si la durée *L(B)* d'au moins un sous-ensemble continu *B* (i.e. un intervalle) de l'ensemble des instants d'anomalie A est supérieure au seuil de mesure prédéterminé, et le cas échéant identifient chaque sous-ensemble *B* vérifiant cette condition. En d'autre termes, l'étape (d) comprend avantageusement l'identification par les moyens de traitement de données 30 de chaque sous-ensemble continu *B* de l'ensemble des instants d'anomalie *A* présentant une durée *L(B)* supérieure audit seuil de mesure prédéterminé *Seuil_Mesure.* Ces sous-ensembles *B* sont en effet ceux pendant lesquels une déficience peut être potentiellement observée.

Ladite « durée » déterminée est avantageusement également la mesure de Lebesgue.

Dans la mesure où, pour tout sous-ensemble continu de *A* on a $L(B) \leq L(A),$ on comprend l'intérêt de vérifier si *L(A)>Seuil_Mesure* : si ce n'est pas le cas, on peut être sûr qu'il n'existe aucun sous-ensemble B de A présentant une durée supérieure au seuil de mesure prédéterminé, et donc que l'état du dispositif 10 est nominal. Il est alors inutile de mettre en oeuvre l'étape (e) et de passer du temps à chercher les sous-ensembles B.

Au contraire, si la condition *L(A)>Seuil_Mesure* est vérifiée, alors l'existence d'au moins un sous-ensemble B est possible mais non garantie.

La recherche peut alors être mise en oeuvre de façon itérative : pour chaque sous-ensemble continu rencontré (en commençant par le début de la journée), sa durée est calculée et comparée au seuil de mesure de sorte à déterminer si ce sous-ensemble est retenu. Pour gagner du temps, il est possible de retrancher à *L(A)* la durée de chaque sous-ensemble continu rencontré : si cette valeur descend en-dessous du seuil de mesure il est inutile de regarder plus loin.

Si au moins un sous-ensemble *B* est identifié, alors les moyens de traitement de données 30 déterminent (le cas échéant) à l'étape (e) un état déficient du dispositif 10 en fonction d'au moins une valeur maximale (notée *M*) atteinte dans ledit sous-ensemble continu B de ladite composante haute fréquence *Tint_f(t)* de la température mesurée *Tint(t).* $M = max\ (Tint\_f(t), t \in B).$ On note également *Temps_max* l'instant d'atteinte de cette valeur maximale, en d'autres termes $M = Tint\_f(Temps\_Max).$ De façon préférée, cela est répété pour chaque sous-ensemble B de durée supérieure audit seuil de mesure : il est possible qu'un premier sous-ensemble B ne permette pas de conclure à la déficience du dispositif 10 (si les conditions météorologiques sont plus clémentes) contrairement à un deuxième sous-ensemble B. Le dispositif 10 sera alors bien déterminé comme déficient.

Comme déjà expliqué, l'écart e(t) permet ainsi d'identifier les sous-ensembles *B* d'anomalies potentielles, et la composante haute fréquence *Tint_f(t)* de la température mesurée *Tint(t)* permet de tester ces sous-ensembles *B.*

De façon préférée, l'état déficient du dispositif 10 est choisi parmi :

- Arrêté complètement,
- Arrêté temporairement, et/ou
- Mal réglé

« Arrêté complètement » signifie que le dispositif 10 n'apparait pas avoir fonctionné durant au moins la majeure partie de l'intervalle temporel donné. Si cela peut vouloir dire que le dispositif 10 est hors-service et doit être réparé, des explications plus simples peuvent être que le lien entre le module de commande 21 et la partie opérationnelle du dispositif 10 est coupé (i.e. que le dispositif 10 ne reçoit plus d'ordres d'allumage), voire tout simplement que l'utilisateur a coupé son dispositif 10 et a oublié de le rallumer.

Une déficience est donc identifiée, mais des tests peuvent être envisagés (par exemple par téléphone avec l'utilisateur) avant qu'un technicien ne se déplace.

Alternativement, « arrêté temporairement » signifie que le dispositif était arrêté mais s'est rallumé, bien que de façon tardive. Il s'agit d'une relance « ratée ».

Une déficience est donc également identifiée. Les explications sont potentiellement toujours simples (coupure temporaire d'électricité par exemple), mais sinon il y a un problème plus sérieux nécessitant d'examiner le dispositif 10.

Enfin « mal réglé » signifie que le dispositif 10 produit des relances lentes. Il présente ainsi des performances anormalement basses, voire est sous-dimensionné pour l'environnement dans lequel il fonctionne (il est par exemple incapable de faire face à certains épisodes de froid intense même en fonctionnant à plein régime). Il s'agit également d'une déficience, mais qui ne signifie pas forcément que le dispositif 10 doit être réparé : ce dernier peut parfaitement marcher, mais être inadapté au bâtiment. Il est possible d'agir en installant par exemple un autre dispositif 10 en complément.

On comprendra bien que les déficiences peuvent se cumuler : le dispositif 10 peut être juste être « mal réglé » (i.e. la relance n'est pas en retard mais d'une intensité insuffisante), juste « arrêté temporairement » (i.e. la relance est pas en retard mais d'une intensité suffisante), ou « arrêté temporairement et mal réglé » cela correspond à un arrêt suivi d'une relance lente.

On note que si le dispositif 10 est dans un état arrêté complètement il est impossible de savoir s'il est bien réglé ou non.

Comme expliqué, l'utilisation de la composante haute fréquence $Tint\_f(t)$ de la température mesurée $Tint(t)$ (et plus précisément de la valeur maximale $M$ atteinte sur un sous-ensemble $B$ d'une durée supérieure au seuil de mesure) permet de détecter et classifier ces déficiences.

De façon avantageuse, le dispositif 10 est déterminé dans un état arrêté complètement à l'étape (e) si ladite valeur maximale $M$ atteinte dans ledit sous-ensemble continu $B$ de ladite composante haute fréquence $Tint\_f(t)$ de la température mesurée $Tint(t)$ est inférieure à un premier seuil, dit $Seuil\_HFBas$.

En d'autres termes, la valeur de ladite composante haute fréquence $Tint\_f(t)$ de la température mesurée $Tint(t)$ est toujours inférieure audit premier seuil sur tout le sous-ensemble B. Cela traduit une absence de variation à la hausse de la température, et donc un dispositif 10 arrêté.

Le premier seuil $Seuil\_HFBas$ est avantageusement compris entre 0.15 et 0.5, préférentiellement environ 0.25.

Par ailleurs, le dispositif 10 est avantageusement déterminé dans un état mal réglé à l'étape (e) si ladite valeur maximale atteinte dans ledit sous-ensemble continu $B$ de ladite composante haute fréquence $Tint\_f(t)$ de la température mesurée $Tint(t)$ est comprise entre ledit premier seuil et un deuxième seuil supérieur au premier seuil, ce deuxième seuil étant noté $Seuil\ HFMoyen$.

En d'autres termes, si la composante haute fréquence $Tint\_f(t)$ de la température mesurée $Tint(t)$ dépasse $Seuil\_HFMoyen$, on considère que le dispositif est capable de générer une variation à la hausse de la température nominale (i.e. de suivre une variation de consigne), mais si cette composante haute fréquence $Tint\_f(t)$ de la température mesurée $Tint(t)$ dépasse $Seuil\_HFBas$ sans dépasser $Seuil\_HFMoyen$, c'est que le dispositif est bien en fonctionnement mais avec des performances anormalement basses (la remontée en température existe mais est très lente) : on est dans l'état mal réglé défini précédemment.

Le deuxième seuil $Seuil\_HFMoyen$ est avantageusement compris entre 0.5 et 1, préférentiellement environ 0.75.

Alternativement ou en complément, le dispositif 10 est déterminé dans un état arrêté temporairement à l'étape (e) si ladite valeur maximale $M$ atteinte dans ledit sous-ensemble continu $B$ de ladite composante haute fréquence $Tint\_f(t)$ de la température mesurée $Tint(t)$ n'est pas inférieure audit premier seuil (i.e. le dispositif n'est pas arrêté complètement), et si la durée entre le début dudit sous-ensemble continu B (en d'autres sa borne inférieure, notée $min(B)$) et l'instant où ladite valeur maximale de ladite composante haute fréquence $Tint\_f(t)$ de la température mesurée $Tint(t)$ est atteinte dans ledit sous-ensemble continu $B$ est supérieure à un seuil de retard prédéterminé, noté $Seuil\_Retard$.

En d'autres termes, les moyens de traitement de données déterminent le temps nécessaire pour atteindre la valeur maximale de la composante haute fréquence $Tint\_f(t)$ de la température mesurée $Tint(t)$ sur l'intervalle B.

En effet, si la valeur maximale $M$ n'est pas anormalement basse, c'est que le dispositif 10 est éventuellement mal réglé mais fonctionne. Un temps anormalement long pour atteindre cette valeur maximale $M$ est ainsi représentatif d'un arrêt temporaire du dispositif 10.

Plus précisément, si ladite valeur maximale $M$ atteinte dans ledit sous-ensemble continu $B$ de ladite composante haute fréquence $Tint\_f(t)$ de la température mesurée $Tint(t)$ n'est pas inférieure audit deuxième seuil, et si la durée entre le début dudit sous-ensemble continu $B$ et l'instant où ladite valeur maximale de ladite composante haute fréquence $Tint\_f(t)$ de la température mesurée $Tint(t)$ est atteinte dans ledit sous-ensemble continu $B$ est supérieure à un seuil de retard prédéterminé, alors on est dans l'état arrêt temporaire suivi d'une relance normale, et si ladite valeur maximale $M$ atteinte dans ledit sous-ensemble continu $B$ de ladite composante haute fréquence $Tint\_f(t)$ de la température mesurée $Tint(t)$ est comprise entre ledit premier seuil et un deuxième seuil supérieur, et si la durée entre le début dudit sous-ensemble continu B et l'instant où ladite valeur maximale de ladite composante haute fréquence $Tint\_f(t)$ de la température mesurée $Tint(t)$ est atteinte dans ledit sous-ensemble continu $B$ est supérieure à un seuil de retard prédéterminé, alors on est dans l'état arrêt temporaire suivi d'une relance lente (i.e. dispositif 10 mal réglé).

Au contraire, le dispositif 10 est déterminé comme ne présentant pas un état déficient à l'étape (e) si ladite valeur maximale $M$ atteinte dans ledit sous-ensemble continu B de ladite composante haute fréquence $Tint\_f(t)$ de la température mesurée $Tint(t)$ n'est pas inférieure audit deuxième seuil, et si la durée entre le début dudit sous-ensemble continu $B$ et l'instant où ladite valeur maximale de ladite composante haute fréquence $Tint\_f(t)$ de la température mesurée

*Tint(t)* est atteinte dans ledit sous-ensemble continu B n'est pas supérieure audit seuil de retard prédéterminé (i.e. relance effectuée dans les temps).

Le seuil de retard *Seuil_Retard* est avantageusement compris entre 0.5h et 2h, préférentiellement environ trois quarts d'heure.

Le cas échéant, est mise en oeuvre une étape (e) de déclenchement par les moyens de traitement de données 30 d'une alarme si le dispositif 10 est déterminé comme déficient. Le type d'alarme mise en oeuvre par les moyens 30 peut dépendre du type de déficience identifié.

L'alarme peut être un signal visuel (par exemple via un code couleur, en particulier rouge si la déficience est par exemple un arrêt complet), ou une notification d'un problème potentiel à plus long terme typiquement si le dispositif 10 est déterminé par réglé.

On notera que le présent procédé permet :

- D'une part de détecter des déficiences que l'utilisateur n'aurait pas forcément perçues si les conditions météorologiques sont bonnes (typiquement en cas de mauvais réglage) ;
- D'autre part de limiter des interventions d'un technicien de maintenance lorsqu'elles ne sont pas forcément nécessaires (propositions de tests à réaliser par l'utilisateur après la détection de déficience) ;
- Mais encore d'optimiser les opérations de maintenance (qui sont traditionnellement effectuées à des moments prédéterminés, par exemple tous les ans, plutôt que quand elles sont nécessaires).

*Résumé de l'algorithme*

Dans un mode particulièrement préféré, l'algorithme mis en oeuvre par les moyens de traitement de données 30 exprimé en pseudo-langage est le suivant :

(a) Mesure de la température du milieu *Tint(t)* au cours du temps
(b) Calcul de l'erreur $e(t) = Tcons(t)-Tint(t)$
(c) Calcul de *Tint_f(t)* la composante haute fréquence du signal *Tint(t)*
(d) Calcul de l'ensemble *A* des temps où l'erreur *e(t)* est supérieure à un seuil prédéterminé *Seuil_Erreur* : $A = \{t$ *tel que e(t)>Seuil_Erreur*}. Calcul de la mesure de Lebesgue *L(A)* de l'ensemble *A* (e) Détermination du fonctionnement du dispositif :

- **If** : *L(A)>Seuil_Mesure*
  - **If** : il existe un intervalle de temps continu *B* inclus dans *A* de mesure de Lebesgue supérieure à *Seuil_Mesure*

- Calcul de *M = max(Tint_f(t))* sur le sous-ensemble B et de *Temps_max* l'instant tel que *M=Tint_f(Temps_max)*
  - **If** : *M<Seuil_HFBas*
    - Etat = Arrêt complet.
  - **Else If** : *M < Seuil_HFMoyen*
    - **If** : *Temps_max - min(B)>Seuil_Retard*
      - Etat dispositif = Arrêt temporaire suivi de relance lente (mauvais réglage)
    - **Else** :
      - Etat = Relance lente (mauvais réglage)
    - **End if**
  - **Else** :
    - **If** : *Temps_max - min(B)>Seuil_Retard*
      - Etat = Arrêt temporaire suivi de relance réussie
    - **Else** :
      - Etat = Relance Réussie (OK)
    - **End if**.
  - **End if**.
  - **Else** :
    - Etat = Relance Réussie (OK)
  - **End If**
- **Else** :
  - Etat = Relance réussie (OK)
- **End If**

On note que relance réussie signifie qu'il n'y a pas de déficience identifiée.

*Exemples*

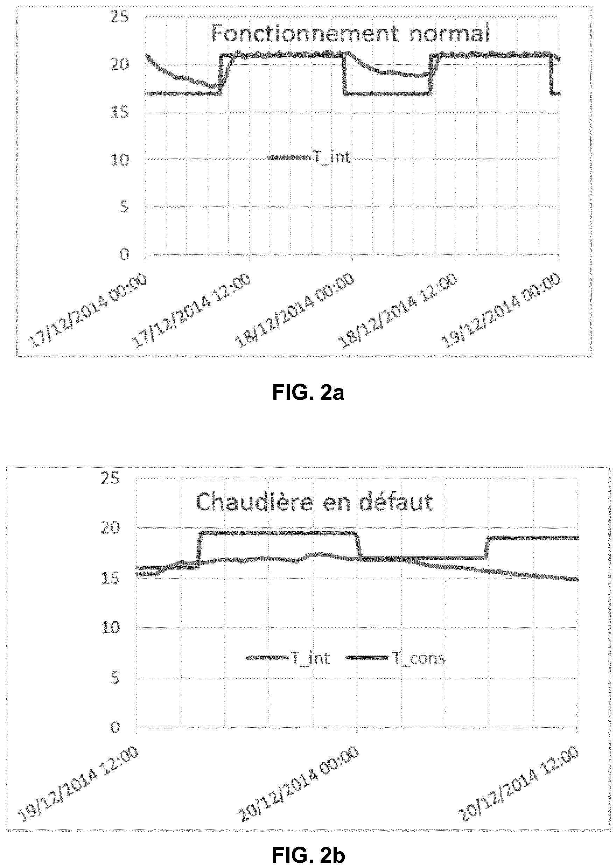

Les figures 2a et 2b illustrent respectivement la température mesurée Tint(f) et la température de consigne Tcons(t) dans un cas normal (pas de déficience) et dans un cas de dispositif 10 défectueux, sur une période de deux jours (deux intervalles temporels).

On repère sur la figure 2a les deux relances réussies (chaque matin). On constate qu'au moment du passage de la valeur de consigne de 17 à 21°C, une forte erreur apparait, mais elle est compensée complètement en 1 à 2h.

Sur la figure 2b, les relance n'ont aucun impact, et la température soit continue de baisser (2<sup>e</sup> jour) soit monte extrêmement doucement (1<sup>er</sup> jour), probablement à cause des conditions extérieures.

On voit que la courbe est complètement plate et que seules des variations à basse fréquence (essentiellement dues au cycle jour nuit et aux conditions extérieures) ont lieu : un vaste sous-ensemble *B* de durée supérieure au seuil de mesure (typiquement 1.5h) s'étend chaque jour sur toute la période de consigne haute (durée d'environ 12h, avec une erreur d'au moins 2-3°C en permanence).

Sur ce sous-ensemble B, la valeur maximale *M* atteinte de ladite composante haute fréquence *Tint_f(t)* de la température mesurée *Tint(t)* est à peine supérieure à zéro le premier jour et complètement négative le deuxième jour, ce qui traduit un dispositif 10 complètement arrêté, et au mieux très mal réglé (et proche du hors-service) le premier jour.

*Système*

Selon un deuxième aspect, l'invention concerne un système de détection de déficiences d'un dispositif de chauffage 10 en fonctionnement dans un milieu donné. Il s'agit d'un système pour la mise en oeuvre du précédent procédé.

Le système comprend :

- Au moins une sonde 20 mesurant la température dudit milieu au cours du temps *Tint(t)* sur un intervalle de temps donné ;
- des moyens de traitement de données 30 configurés pour mettre en oeuvre :

  o un module de calcul d'une erreur de température au cours du temps *e(t)* en fonction de la température mesurée *Tint(t)* et d'une consigne de température au cours du temps *Tcons(t)* appliquée par le dispositif de chauffage 10;
  o un module de détermination par filtrage d'une composante haute fréquence *Tint_f(t)* de la température mesurée *Tint(t)* ;
  o un module de détermination d'un ensemble des instants d'anomalie *A* dans ledit intervalle donné par comparaison de ladite erreur de température au cours du temps *e(t)* avec un seuil d'erreur prédéterminé ;
  o un module de détermination, si une durée *L(B)* d'au moins un sous-ensemble continu *B* de l'ensemble des instants d'anomalie *A* est supérieure à un seuil de mesure prédéterminé, d'un état déficient du dispositif 10 en fonction d'au moins une valeur maximale atteinte dans ledit sous-ensemble continu *B* de ladite composante haute fréquence *Tint_f(t)* de la température mesurée *Tint(t)* ;
  o un module de déclenchement d'une alarme si le dispositif 11 est déterminé comme présentant un état déficient.

Ce système peut être de nombreuses natures différentes et englober un ou plusieurs équipements (i.e. la ou les sondes 20 et les moyens de traitement 30 peuvent être distants).

De façon préférée, la ou les sondes 20 sont celles d'un thermostat 14 comprenant également le module de contrôle 21, et de façon encore plus préférée les moyens de traitement de données 30 sont confondus avec le module de contrôle 21. En d'autres termes, ce système est typiquement le thermostat 14.

L'invention concerne également le dispositif 10 comprenant ces éléments.

**Revendications**

**1.** Procédé de détection de déficiences d'un dispositif de chauffage (10) en fonctionnement dans un milieu donné, comprenant la mise en oeuvre d'étapes de :

(a) Mesure par une sonde (20) de la température dudit milieu au cours du temps (Tint(t)) sur un intervalle de temps donné ;
(b) Calcul par des moyens de traitement de données (30) d'une erreur de température au cours du temps (e(t)) en fonction de la température mesurée (Tint(t)) et d'une consigne de température au cours du temps (Tcons(t)) appliquée par le dispositif de chauffage (10) ;
(c) Détermination par filtrage en-dessous d'une fréquence de coupure entre 1/3600 Hz et 1/600 Hz par les moyens de traitement de données (30) d'une composante haute fréquence (Tint_f(t)) de la température mesurée (Tint(t)) ;
(d) Détermination par les moyens de traitement de données (30) d'un ensemble des instants d'anomalie (A) dans ledit intervalle donné par comparaison de ladite erreur de température au cours du temps (e(t)) avec un seuil d'erreur prédéterminé ;
(e) Si une durée (L(B)) d'au moins un sous-ensemble continu (B) de l'ensemble des instants d'anomalie (A) est supérieure à un seuil de mesure prédéterminé, détermination par les moyens de traitement de données (30) d'un état déficient du dispositif (10) en fonction d'au moins une valeur maximale atteinte dans ledit sous-ensemble continu (B) de ladite composante haute fréquence (Tint_f(t)) de la température mesurée (Tint(t)) ;
(f) Déclenchement par les moyens de traitement de données (30) d'une alarme si le dispositif (10) est déterminé comme présentant un état déficient.

**2.** Procédé selon la revendication 1, dans lequel l'étape (d) comprend le calcul par les moyens de traitement de données (30) de la durée (L(A) de l'ensemble des instants d'anomalie (A) dans ledit intervalle donné ; et, si ladite durée L(A) de l'ensemble des instants d'anomalie (A) est supérieure audit seuil de mesure prédéterminé, l'identification de chaque sous-ensemble continu (B) de l'ensemble des instants d'anomalie (A) présentant une durée (L(B)) supérieure audit seuil de mesure prédéterminé.

**3.** Procédé selon la revendication 2, dans lequel la durée (L(A), L(B)) d'un ensemble ou un sous-ensemble d'instants d'anomalie (A, B) est la mesure de Lebesgue (L(.)) dudit ensemble ou sous-ensemble sur ledit intervalle donné.

**4.** Procédé selon l'une des revendications 2 et 3, dans lequel le dispositif est déterminé à l'étape (e) comme n'étant pas dans un état déficient si ladite durée L(A) de l'ensemble des instants d'anomalie (A) n'est pas supérieure audit seuil de mesure prédéterminé ou si aucun sous-ensemble continu (B) de l'ensemble des instants d'anomalie (A) présentant une durée (L(B)) supérieure audit seuil de mesure prédéterminé n'est identifié.

**5.** Procédé selon l'une des revendications précédentes, dans laquelle l'état déficient du dispositif (10) est choisi parmi :

- Arrêté complètement,
- Arrêté temporairement, et/ou
- Mal réglé.

**6.** Procédé selon la revendication 5, dans laquelle le dispositif (10) est déterminé dans un état arrêté complètement à l'étape (e) si ladite valeur maximale atteinte dans ledit sous-ensemble continu (B) de ladite composante haute fréquence (Tint_f(t)) de la température mesurée (Tint(t)) est inférieure à un premier seuil.

**7.** Procédé selon la revendication 6, dans laquelle le dispositif (10) est déterminé dans un état mal réglé à l'étape (e) si ladite valeur maximale atteinte dans ledit sous-ensemble continu (B) de ladite composante haute fréquence (Tint_f(t)) de la température mesurée (Tint(t)) est comprise entre ledit premier seuil et un deuxième seuil supérieur au premier seuil.

**8.** Procédé selon l'une des revendications 6 et 7, dans laquelle le dispositif (10) est déterminé dans un état arrêté temporairement à l'étape (e) si ladite valeur maximale atteinte dans ledit sous-ensemble continu (B) de ladite composante haute fréquence (Tint_f(t)) de la température mesurée (Tint(t)) n'est pas inférieure audit premier seuil, et si la durée entre le début dudit sous-ensemble continu (B) et l'instant où ladite valeur maximale de ladite composante haute fréquence (Tint_f(t)) de la température mesurée (Tint(t)) est atteinte dans ledit sous-ensemble continu (B) est supérieure à un seuil de retard prédéterminé.

**9.** Procédé selon les revendications 7 et 8 en combinaison, dans laquelle le dispositif (10) est déterminé comme ne présentant pas un état déficient à l'étape (e) si ladite valeur maximale atteinte dans ledit sous-ensemble continu (B) de ladite composante haute fréquence (Tint_f(t)) de la température mesurée (Tint(t)) n'est pas inférieure audit deuxième seuil, et si la durée entre le début dudit sous-ensemble continu (B) et l'instant où ladite valeur maximale de ladite composante haute fréquence (Tint_f(t)) de la température mesurée (Tint(t)) est atteinte dans ledit sous-ensemble continu (B) n'est pas supérieure audit seuil de retard prédéterminé.

**10.** Procédé selon l'une des revendications précédentes, dans laquelle le dispositif (10) comprend un module de contrôle (21) fournissant ladite consigne de température au cours du temps (Tcons(t)) appliquée par le dispositif de chauffage (10), les moyens de traitement de données (30) étant intégrés audit module de contrôle (21).

**11.** Procédé selon l'une des revendications précédentes, dans lequel les moyens de traitement de données (30) sont connectés à un réseau de communication (3), l'alarme de l'étape (f) étant déclenchée au niveau d'un équipement distant d'un opérateur du dispositif (10).

**12.** Système (14) de détection de déficiences d'un dispositif de chauffage (10) en fonctionnement dans un milieu donné, comprenant :

- une sonde (20) mesurant la température dudit milieu au cours du temps (Tint(t)) sur un intervalle de temps donné ;
- des moyens de traitement de données (30) configurés pour mettre en oeuvre :

o un module de calcul d'une erreur de température au cours du temps (e(t)) en fonction de la température mesurée (Tint(t)) et d'une consigne de température au cours du temps (Tcons(t)) appliquée par le dispositif de chauffage (10) ;
o un module de détermination par filtrage en-dessous d'une fréquence de coupure entre 1/3600 Hz et 1/600 Hz d'une composante haute fréquence (Tint_f(t)) de la température mesurée (Tint(t)) ;
o un module de détermination d'un ensemble des instants d'anomalie (A) dans ledit intervalle donné par comparaison de ladite erreur de température au cours du temps (e(t)) avec un seuil d'erreur prédéterminé ;

o un module de détermination, si une durée (L(B)) d'au moins un sous-ensemble continu (B) de l'ensemble des instants d'anomalie (A) est supérieure à un seuil de mesure prédéterminé, d'un état déficient du dispositif (10) en fonction d'au moins une valeur maximale atteinte dans ledit sous-ensemble continu (B) de ladite composante haute fréquence (Tint_f(t)) de la température mesurée (Tint(t)) ;

o un module de déclenchement d'une alarme si le dispositif (10) est déterminé comme présentant un état déficient.

**13.** Système selon la revendication 12, étant un thermostat du dispositif de chauffage (10) comprenant en outre un module de contrôle (21) du dispositif de chauffage (10).

**14.** Système selon la revendication 13, dans lequel les moyens de traitement de données (30) étant mis en oeuvre par le module de contrôle (21).

**15.** Dispositif de chauffage (10) comprenant un système (14) selon l'une des revendications 12 à 14.

**Patentansprüche**

**1.** Verfahren zur Erkennung von Mängeln einer Heizvorrichtung (10) im Betrieb in einer bestimmten Umgebung, umfassend das Anwenden der folgenden Schritte:

(a) Messen mit einer Sonde (20) der Temperatur der Umgebung im Laufe der Zeit (Tint(t)) in einem bestimmten Zeitintervall;

(b) Berechnen durch Datenverarbeitungsmittel (30) eines Temperaturfehlers im Laufe der Zeit (e(t)) in Abhängigkeit von der gemessenen Temperatur (Tint(t)) und von einem Temperatursollwert im Laufe der Zeit (Tcons(t)), der durch die Heizvorrichtung (10) angewendet wird;

(c) Bestimmen durch Filtern unterhalb einer Grenzfrequenz zwischen 1/3600 Hz und 1/600 Hz durch die Datenverarbeitungsmittel (30) einer Hochfrequenzkomponente (Tint_f(t)) der gemessenen Temperatur (Tint(t));

(d) Bestimmen durch die Datenverarbeitungsmittel (30) einer Einheit der Anomalie-Momente (A) in dem bestimmten Intervall durch Vergleichen des Temperaturfehlers im Laufe der Zeit (e(t)) mit einer vorbestimmten Fehlergrenze;

(e) falls eine Dauer (L(B)) von mindestens einer kontinuierlichen Untereinheit (B) der Einheit der Anomalie-Momente (A) größer als eine vorbestimmte Messgrenze ist, Bestimmen durch die Datenverarbeitungsmittel (30) eines Mangelzustands der Vorrichtung (10) in Abhängigkeit von mindestens einem erreichten Maximalwert in der kontinuierlichen Untereinheit (B) der Hochfrequenzkomponente (Tint_f(t)) der gemessenen Temperatur (Tint(t));

(f) Auslösen durch die Datenverarbeitungsmittel (30) eines Alarms, wenn bestimmt wird, dass die Vorrichtung (10) einen Mangelzustand aufweist.

**2.** Verfahren nach Anspruch 1, wobei der Schritt (d) das Berechnen durch die Datenverarbeitungsmittel (30) der Dauer (L(A)) der Einheit der Anomalie-Momente (A) in dem bestimmten Intervall umfasst; und, wenn die Dauer L(A) der Einheit der Anomalie-Momente (A) größer als die vorbestimmte Messgrenze ist, das Identifizieren jeder kontinuierlichen Untereinheit (B) der Einheit der Anomalie-Momente (A), die eine Dauer (L(B)) größer als die vorbestimmte Messgrenze aufweist.

**3.** Verfahren nach Anspruch 2, wobei die Dauer (L(A), L(B)) einer Einheit oder Untereinheit von Anomalie-Momenten (A, B) das Lebesgue-Maß (L(.)) der Einheit oder Untereinheit in dem bestimmten Intervall ist.

**4.** Verfahren nach einem der Ansprüche 2 und 3, wobei in Schritt (e) bestimmt wird, dass sich die Vorrichtung nicht in einem Mangelzustand befindet, wenn die Dauer L(A) der Einheit der Anomalie-Momente (A) nicht größer als die vorbestimmte Messgrenze ist, oder wenn keine kontinuierliche Untereinheit (B) der Einheit der Anomalie-Momente (A), die eine Dauer (L(B)) aufweist, die größer als die vorbestimmte Messgrenze aufweist, identifiziert wird.

**5.** Verfahren nach einem der vorstehenden Ansprüche, wobei der Mangelzustand der Vorrichtung (10) ausgewählt wird aus:

- vollkommen angehalten,

- vorübergehend angehalten, und/oder
- schlecht eingestellt.

**6.** Verfahren nach Anspruch 5, wobei in dem Schritt (e) bestimmt wird, dass die Vorrichtung (10) vollkommen angehalten ist, wenn der erreichte maximale Wert in der kontinuierlichen Untereinheit (B) der Hochfrequenzkomponente (Tint_f(t)) der gemessenen Temperatur (Tint(t)) kleiner als eine erste Grenze ist.

**7.** Verfahren nach Anspruch 6, wobei in dem Schritt (e) bestimmt wird, dass die Vorrichtung (10) schlecht eingestellt ist, wenn der erreichte maximale Wert in der kontinuierlichen Untereinheit (B) der Hochfrequenzkomponente (Tint_f(t)) der gemessenen Temperatur (Tint(t)) zwischen der ersten Grenze und einer zweiten Grenze über der ersten Grenze enthalten ist.

**8.** Verfahren nach einem der Ansprüche 6 und 7, wobei in dem Schritt (e) bestimmt wird, dass die Vorrichtung (10) vorübergehend angehalten ist, wenn der erreichte maximale Wert in der kontinuierlichen Untereinheit (B) der Hochfrequenzkomponente (Tint_f(t)) der gemessenen Temperatur (Tint(t)) nicht kleiner als die erste Grenze ist, und wenn die Dauer zwischen dem Beginn der kontinuierlichen Untereinheit (B) und dem Zeitpunkt, an dem der maximale Wert der Hochfrequenzkomponente (Tint_f(t)) der gemessenen Temperatur (Tint(t)) in der kontinuierlichen Untereinheit (B) erreicht wird, größer als eine vorbestimmte Verzögerungsgrenze ist.

**9.** Verfahren nach den Ansprüchen 7 und 8 in Kombination, wobei in dem Schritt (e) bestimmt wird, dass die Vorrichtung (10) keinen Mangelzustand aufweist, wenn der erreichte maximale Wert in der kontinuierlichen Untereinheit (B) der Hochfrequenzkomponente (Tint_f(t)) der gemessenen Temperatur (Tint(t)) nicht kleiner als die zweite Grenze ist, und wenn die Dauer zwischen dem Beginn der kontinuierlichen Untereinheit (B) und dem Zeitpunkt, an dem der maximale Wert der Hochfrequenzkomponente (Tint_f(t)) der gemessenen Temperatur (Tint(t)) in der kontinuierlichen Untereinheit (B) erreicht wird, nicht größer als die vorbestimmte Verzögerungsgrenze ist.

**10.** Verfahren nach einem der vorstehenden Ansprüche, wobei die Vorrichtung (10) ein Kontrollmodul (21) umfasst, das den Temperatursollwert im Laufe der Zeit (Tcons(t)), der durch die Heizvorrichtung (10) angewendet wird, bereitstellt, wobei die Datenverarbeitungsmittel (30) in das Kontrollmodul (21) integriert sind.

**11.** Verfahren nach einem der vorstehenden Ansprüche, wobei die Datenverarbeitungsmittel (30) mit einem Kommunikationsnetzwerk (3) verbunden sind, wobei der Alarm aus Schritt (f) im Bereich einer entfernten Ausrüstung eines Betreibers der Vorrichtung (10) ausgelöst wird.

**12.** System (14) zur Erkennung von Mängeln einer Heizvorrichtung (10) im Betrieb in einer bestimmten Umgebung, umfassend:

- eine Sonde (20), welche die Temperatur der Umgebung im Laufe der Zeit (Tint(t)) in einem bestimmten Zeitintervall misst;
- Datenverarbeitungsmittel (30), die konfiguriert sind, um Folgendes anzuwenden:

° ein Modul zum Berechnen eines Temperaturfehlers im Laufe der Zeit (e(t)) in Abhängigkeit von der gemessenen Temperatur (Tint(t)) und eines Temperatursollwerts im Laufe der Zeit (Tcons(t)), der durch die Heizvorrichtung (10) angewendet wird;
° ein Modul zum Bestimmen durch Filtern unterhalb einer Grenzfrequenz zwischen 1/3600 Hz und 1/600 Hz einer Hochfrequenzkomponente (Tint_f(t)) der gemessenen Temperatur (Tint(t));
° ein Modul zum Bestimmen einer Einheit der Anomalie-Momente (A) in dem bestimmten Intervall durch Vergleichen des Temperaturfehlers im Laufe der Zeit (e(t)) mit einer vorbestimmten Fehlergrenze;
° ein Modul zum Bestimmen, ob eine Dauer (L(B)) von mindestens einer kontinuierlichen Untereinheit (B) der Einheit der Anomalie-Momente (A) größer als eine vorbestimmte Messgrenze ist, eines Mangelzustands der Vorrichtung (10) in Abhängigkeit von mindestens einem erreichten Maximalwert in der kontinuierlichen Untereinheit (B) der Hochfrequenzkomponente (Tint_f(t)) der gemessenen Temperatur (Tint(t));
° ein Modul zum Auslösen eines Alarms, wenn bestimmt wird, dass die Vorrichtung (10) einen Mangelzustand aufweist.

**13.** System nach Anspruch 12, das ein Thermostat der Heizvorrichtung (10) ist, der weiter ein Kontrollmodul (21) der Heizvorrichtung (10) umfasst.

**14.** System nach Anspruch 13, wobei die Datenverarbeitungsmittel (30) durch das Kontrollmodul (21) angewendet werden.

**15.** Heizvorrichtung (10), umfassend ein System (14) nach einem der Ansprüche 12 bis 14.

**Claims**

**1.** Method for detecting deficiencies of a heating device (10) in operation in a given environment, comprising the implementation of steps of:

(a) Measuring with a probe (20) the temperature of said environment over time (Tint(t)) over a given time interval;
(b) Calculating with data processing means (30) a temperature error over time (e(t)) according to the measured temperature (Tint(t)) and a temperature setpoint over time (Tcons(t)) applied by the heating device (10);
(c) Determining by filtering below a cut-off frequency between 1/3600Hz and 1/600Hz by the data processing means (30) of a high frequency component (Tint_f(t)) of the measured temperature (Tint(t));
(d) Determining by the data processing means (30) a set of anomaly instants (A) in said given interval by comparison of said temperature error over time (e(t)) with a predetermined error threshold;
(e) If a duration (L(B)) of at least one continuous subset (B) of all the anomaly instants (A) is greater than a predetermined measurement threshold, determining by the data processing means (30) a deficient state of the device (10) according to at least one maximum value reached in said continuous subset (B) of said high frequency component (Tint_f(t)) of the measured temperature (Tint(t));
(f) Triggering by the data processing means (30) an alarm if the device (10) is determined as having a deficient state.

**2.** Method according to claim 1, wherein step (d) comprises the calculation by the data processing means (30) of the duration (L(A) of all the anomaly instants (A) in said given interval; and, if said duration L(A) of all the anomaly instants (A) is greater than said predetermined measurement threshold, the identification of each continuous subset (B) of all the anomaly instants (A) having a duration (L(B)) greater than said predetermined measurement threshold.

**3.** Method according to claim 2, wherein the duration (L(A), L(B)) of a set or subset of anomaly instants (A, B) is the Lebesgue measure (L(.)) of said set of subset over said given interval.

**4.** Method according to one of claims 2 and 3, wherein the device is determined in step (e) as not being in a deficient state if said duration L(A) of all the anomaly instants (A) is not greater than said predetermined measurement threshold or if no continuous subset (B) of all the anomaly instants (A) having a duration (L(B)) greater than said predetermined measurement threshold is not identified.

**5.** Method according to one of the preceding claims, wherein the deficient state of the device (10) is selected from among:

- Completely stopped,
- Temporarily stopped, and/or
- Out of adjustment.

**6.** Method according to claim 5, wherein the device (10) is determined in a completely stopped state in step (e) if said maximum value reached in said continuous subset (B) of said high frequency component (Tint_f(t)) of the measured temperature (Tint (t)) is less than a first threshold.

**7.** Method according to claim 6, wherein the device (10) is determined in an out of adjustment state in step (e) if said maximum value reached in said continuous subset (B) of said high frequency component (Tint_f(t)) of the measured temperature (Tint (t)) is between said first threshold and a second threshold greater than the first threshold.

**8.** Method according to one of claims 6 and 7, wherein the device (10) is determined in a temporarily stopped state in step (e) if said maximum value reached in said continuous subset (B) of said high frequency component (Tint_f(t)) of the measured temperature (Tint(t)) is not less than said first threshold, and if the duration between the start of said continuous subset (B) and the instant when said maximum value of said high frequency component (Tint_f(t)) of the measured temperature (Tint(t)) is reached in said continuous subset (B) is greater than a predetermined delay threshold.

9. Method according to claims 7 and 8 combined, wherein the device (10) is determined as not having a deficient state in step (e) if said maximum value reached in said continuous subset (B) of said high frequency component (Tint_f(t)) of the measured temperature (Tint(t)) is not less than said second threshold, and if the duration between the start of said continuous subset (B) and the instant when said maximum value of said high frequency component (Tint_f(t)) of the measured temperature (Tint (t)) is reached in said continuous subset (B) is not greater than said predetermined delay threshold.

10. Method according to one of the preceding claims, wherein the device (10) comprises a control module (21) providing said temperature setpoint over time (Tcons(t)) applied by the heating device (10), the data processing means (30) being integrated to said control module (21).

11. Method according to one of the preceding claims, wherein the data processing means (30) are connected to a communication network (3), the alarm of step (f) being triggered at an item of equipment distant from an operator of the device (10).

12. System (14) for detecting deficiencies of a heating device (10) in operation in a given environment, comprising:

- a probe (20) measuring the temperature of said environment over time (Tint(t)) over a given time interval;
- data processing means (30) configured to implement:

  o a module for calculating a temperature error over time (e(t)) according to the measured temperature (Tint(t)) and a temperature setpoint over time (Tcons(t)) applied by the heating device (10);
  o a module for determining by filtering below a cut-off frequency between 1/3600Hz and 1/600Hz a high frequency component (Tint_f(t)) of the measured temperature (Tint(t));
  o a module for determining a set of anomaly instants (A) in said given interval by comparison of said temperature error over time (e(t)) with a predetermined error threshold;
  o a module for determining, if a duration (L(B)) of at least one continuous subset (B) of all the anomaly instants (A) is greater than a predetermined measurement threshold, of a deficient state of the device (10) according to at least one maximum value reached in said continuous subset (B) of said high frequency component (Tint_f(t)) of the measured temperature (Tint(t));
  o a module for triggering an alarm if the device (10) is determined as having a deficient state.

13. System according to claim 12, being a thermostat of the heating device (10) further comprising a module for controlling (21) the heating device (10).

14. System according to claim 13, wherein the data processing means (30) are implemented by the control module (21).

15. Heating device (10) comprising a system (14) according to one of claims 12 to 14.

**FIG. 1a**

**FIG. 1b**

FIG. 1c

**FIG. 2a**

**FIG. 2b**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2524033 A